# EUROPÄISCHE PATENTSCHRIFT

(11) **EP 2 747 084 B1**
(45) Veröffentlichungstag und Bekanntmachung des Hinweises auf die Patenterteilung: **28.08.2019**
(21) Anmeldenummer: 13197552.6
(22) Anmeldetag: 16.12.2013
(51) Int. Cl.: G11B 15/00, G11B 17/22, G01S 5/02, G11B 15/68, G05B 19/418, H04L 29/12, G06F 13/40, H04Q 1/02, H04L 12/24, H04W 4/80, H04B 5/00

(54) **Verfahren und Vorrichtung zur automatischen Adressierung und Erkennung räumlicher Nachbarschaftsbeziehungen in modularen Systemen zur Objektübergabe**
Method and device for automatic addressing and detecting spatial vicinity relationships in modular systems for transfering objects
Procédé et dispositif d'adressage et de détection automatiques de relations spatiales de voisinage dans des systèmes modulaires pour la remise d'objets

(30) Priorität: 21.12.2012 DE 102012112974
(43) Veröffentlichungstag der Anmeldung: 25.06.2014
(73) Patentinhaber: BDT Media Automation GmbH, 78628 Rottweil (DE)
(72) Erfinder: Koch, Danny, 78628 Rottweil (DE); Adrion, Ulrich, 78647 Trossingen (DE); Kuner, Martin, 78166 Donaueschingen (DE); Bucher, Franz, 78052 Villingen-Schwenningen (DE)
(74) Vertreter: Westphal, Mussgnug & Partner Patentanwälte mbB

(56) Entgegenhaltungen:
- US-A1- 2005 001 720
- US-A1- 2007 053 695
- US-A1- 2008 133 126
- US-A1- 2009 201 850
- US-A1- 2011 159 862
- US-B1- 6 269 411
- US-B2- 6 930 854

## Beschreibung

Die Erfindung betrifft ein Verfahren und eine Vorrichtung zur automatischen Adressierung und Erkennung räumlicher Nachbarschaftsbeziehungen in modularen Systemen zur Objektübergabe über die Modulgrenzen hinweg.

### Stand der Technik

Modulare Systeme zur Objektübergabe über die Modulgrenzen hinweg findet man unter anderem in Produktionslinien mit Objektübergabe, z.B. Druck-, Papier- und Verpackungsverarbeitungsmaschinen, stapelbaren Vorrichtungen von Datenträgern, sowie Produktionslinien zur Herstellung, Trennung und Reinigung von Halbleitern und vielen anderen Bereichen. Derartige Systeme werden in der Regel mechanisch verbunden, um die Ausrichtung der Module zueinander zu gewährleisten und weiterhin logisch adressiert, um eine eindeutige Zuordnung schaffen zu können, was unter anderem notwendig ist, um eine geordnete Kommunikation der jeweiligen Module untereinander herzustellen. Zur logischen Adressierung werden beispielsweise kodierte Stecker oder Schalter, Schaltkreise oder spezielle Adressierungsprotokolle verwendet. In der Regel besteht die Notwendigkeit, die logische Anordnung mit der physikalischen Anordnung abzugleichen, um eine klare Systemzuordnung gewährleisten zu können.

Aus US 6,930,854 B2 ist eine stapelbare Bandspeicherbibliothek bekannt, welche die Module mechanisch fest miteinander verbindet. Die logische Zuordnung und Adressierung der Module erfolgt über einen Algorithmus, wobei zunächst die Anzahl der Teilnehmer im System über eine serielle Punkt zu Punkt Datenverbindung (RS232) ermittelt wird, daraufhin wird basierend auf dem Startpunkt eines Basisgeräts ein Transporter von einem Gerät zum Nächsten gefahren, wobei Sensoren die Ankunft an Referenzpunkten überwachen und dementsprechend eine logische Moduladresse vergeben.

US 6,269,411 B1 beschreibt eine stapelbare Bandspeicherbibliothek, welche die automatische Adressvergabe über ein serielles Protokoll in Verbindung mit einem Schaltkreis zur eindeutigen Adressvergabe herstellt, wobei auf eine mechanische Verbindung verzichtet werden kann, aber eine elektrische Verbindung jedes Moduls mit dem jeweiligen direkten Nachfolger zwingend ist.

US 6,269,411 B1 beschreibt ein System zur automatischen Adressierung mit Hilfe eines separaten Schaltkreises, welcher die aufeinanderfolgenden stapelbaren Vorrichtungen zum Speichern von Datenträgern entsprechend der Anordnung absteigend nummeriert. Allerdings wird dazu nicht auf den ohnehin verwendeten Kommunikationskanal zurückgegriffen, stattdessen ist eine weitere elektrische Verbindung zwischen den Geräten zwingend notwendig, welche jedes Modul mit dem jeweiligen direkten Nachfolger verbindet, was einen erhöhten Bauteilbedarf und Installationsaufwand darstellt.

Aus der US 2009/201850A1 ist ein System und ein Verfahren bekannt zum Aufbau eines näherungsbasierten ad hoc Netzwerkes zwischen einer Vielzahl von Sensoren und die Nutzung eines solches Netzwerk zur Durchführung einer Ortsüberwachung.

Aus der US 2011/0159862 A1 ist ein System und Verfahren zur Bestimmung des Ortes eines mobilen Gerätes bekannt. Das mobile Gerät kann andere mobile Geräte innerhalb eines Dienstbereiches abfragen, um Identifikationsinformationen zu erhalten, und sendet dann die Identifikationsinformationen an entfernte Server, um sie dort zu speichern. Der entfernte Server kann auch Informationen von anderen mobilen Geräten, die zu den Identifikationsinformationen korrespondieren empfangen. Das mobile Gerät kann dann eine Anfrage bezüglich seines Ortes an den entfernten Server senden, welcher den Ort des mobilen Gerätes basierend auf der Identifikation und/ oder den Ortsinformationen der anderen mobilen Geräte bestimmt bzw. berechnet.

Aus der US 2008/0133126 A1 ist ein System zur kabellosen Ortsbestimmung einer mobilen Station/Einheit (MS) bekannt, und basierend auf den Ortsbestimmungen werden Produkte oder Dienste angeboten. Das System wird verwendet, um einen Benutzer eines mobilen Endgerätes zu einer Vielzahl von gewünschten Orten zu führen und um einen Hinweis an den Benutzer zu senden, wenn er in der Nähe eines gewünschten Produktes ist oder eines Services, der den Ansprüchen des Benutzers entspricht; und zusätzlich werden erweiterte Sicherheitsdienste bereitgestellt. Die Ortsbestimmung erfolgt mit unterschiedlichen Verfahren TDOA, Mustererkennung, Laufzeitmessung, GPS und Netzwerk unterstützen GPS, Eingangswinkel, hoch auflösenden Verbesserungen und zusätzlichen Informationen von kostengünstigen Basisstation. All dies wird berücksichtigt, um den Ort eines mobilen Endgerätes zu bestimmen. Das System somit in der Lage, Notrufe zu erzeugen, eine Überwachung, eine Routenplanung durchzuführen und die Bestimmung des Ortes von Personen und Tieren abzuschließen.

Des Weiteren ist hierbei noch keinerlei Möglichkeit zur Ausrichtung der Module zueinander gegeben. Es würde anhand des Schaltkreises weder erkannt, ob ein Modul des Systems herausgezogen wurde, noch ob es nur geringfügig in der Orientierung abweicht, was jedoch dazu führt, dass der Transporter, welcher durch die Module fährt, vor einer unüberwindbaren Hürde steht.

Mechanische Verbindungen von modularen Systemen zur Objektübergabe über die Modulgrenzen hinweg bedeuten stets einen erhöhten Installationsaufwand. Die vorgeschlagene Erfindung kann sowohl auf physikalische Verbindungen mechanischer Art, als auch elektrische Verbindungskabel verzichten, da der Datenkanal auch über drahtlose Verbindungen hergestellt werden kann und sich das optische Sender- / Empfängersystem für eben diese mechanisch verbindungslose Lösung eignet.

### Überblick über die Erfindung

Der Erfindung liegt die Aufgabe zu Grunde, für ein modulares System, welches die Objektübergabe über die Modulgrenzen hinweg gewährleisten soll und welches in seiner modularen Zusammensetzung variieren kann, eine kostengünstige und dennoch zuverlässige Lösung zur Erkennung aller Module des Systems herzustellen, die räumlichen Nachbarschaftsbeziehungen zu klären, die korrekte Ausrichtung der Module zueinander zu gewährleisten und einen Kommunikationskanal bereitzustellen ohne notwendigerweise eine mechanische Verbindung der Module vorauszusetzen, um nebenbei den Installationsaufwand gering zu halten. Des Weiteren sollte die Möglichkeit bestehen, während des Betriebs festzustellen, ob einzelne Module aus der Systemanordnung herausgenommen wurden, bzw. nach temporärer Abwesenheit wieder der Systemanordnung angehören.

Gelöst wird die Aufgabe durch eine Erfindung mit den Merkmalen der unabhängigen Ansprüche. Vorteilhafte Ausführungsformen ergeben sich aus den Unteransprüchen.

Im Einzelnen handelt es sich um ein Verfahren zur Erkennung räumlicher Nachbarschaftsbeziehungen in einem modularen System, umfassend Modulbaugruppen (M1,.. Mn), wobei jede Modulbaugruppe mindestens einen Sender (S) und mindestens einen Empfänger (R) aufweist, die so angeordnet sind, dass bei korrekter Ausrichtung der Modulbaugruppen, ein Sender (S) einer ersten Modulbaugruppe mit einem Empfänger (R) einer zweiten Modulbaugruppe korrespondiert. Hierbei weist jede Modulbaugruppe zusätzlich zu den Sender und Empfänger einen Netzwerkanschluss auf, um über das Netzwerk eine Kommunikationsverbindung zwischen den Modulbaugruppen aufzubauen. Über dieses Netzwerk erfolgt eine Kommunikation mit der die Sender und Empfänger gesteuert bzw. ausgelesen werden. Somit kann anhand dieser 3 Komponenten, Sender, Empfänger, Netzwerkanschluss eine Erkennung der Kommunikation erfolgen. In einer bevorzugten Ausführungsform kann auch die Genauigkeit der Zuordnung überprüft werden, wobei eine Abweichung von der optimalen Ausrichtung dazu führt, dass eine Entsprechung im Signal und/oder im Empfänger abzulesen ist. Die Sender und Empfänger sind somit im Wesentlichen dazu da, dass die Ausrichtung der Modulbaugruppen festgestellt wird. Der Sender und der Empfänger werden in der bevorzugten Ausführungsform von einer Steuereinheit innerhalb der Modulbaugruppe angesteuert. Die Steuereinheit weist weiterhin den Netzwerkanschluss auf, über den über das Kommunikationsnetzwerk ein Informationsaustausch mit den weiteren Modulbaugruppen erfolgt. über diesen Netzwerkanschluss erhält die Modulbaugruppe Aufträge und Befehle und sendet entsprechende Antworten zurück. Ferner sind die Modulbaugruppen über ein Kommunikationsnetzwerk miteinander verbunden. In der bevorzugten Ausführungsform gibt es eine Master Modulbaugruppe, die im Vorfeld zum Beispiel durch einen entsprechenden Schalter eingeschaltet werden kann, oder sich anhand einer Konfigurationsänderung gegenüber den weiteren Modulbaugruppen abhebt, wobei die anderen Baugruppen auf Befehle der Masterbaugruppe reagieren. In einer bevorzugten Ausführungsform kann es auch redundante Masterbaugruppen geben bzw. eine Einheit die außerhalb der Modulbaugruppen angeordnet ist, um die räumliche Anordnung festzustellen und zu kontrollieren.

Das Verfahren umfasst folgende Schritte:
- Automatisches Anfordern und Zuordnen einer Netzwerkadresse über das Kommunikationsnetzwerk durch jede Modulbaugruppe, so dass diese über das Netzwerk adressierbar ist. Dieser Schritt wird in der Regel am Anfang vorgenommen, wenn eine Initialisierung bzw. ein Anschalten der Modulbaugruppe erfolgt.
   Durch das Anfordern der Kommunikationsadresse, die zum Beispiel über DHCP mitgeteilt wird, registriert sich die Modulbaugruppe an einem DHCP Server und ist somit im Netzwerk bekannt und kann ebenfalls adressiert werden. Durch diese Adresse ist jedoch nicht die Position der Modulbaugruppe innerhalb des Verbandes bekannt, sondern lediglich die Existenz innerhalb des Netzwerks.
- Ermittlung der räumlichen Nachbarschaftsbeziehungen durch Ansteuern und Auswerten der Sender (S) und Empfänger (R) über das Kommunikationsnetzwerk.

In diesem Schritt wird über das Kommunikationsnetzwerk und die im ersten Schritt erhalten Adresse eine Ansteuerung der Sender und Empfänger aller Modulbaugruppen des Netzwerks vorgenommen, in einer Form aus der erkenntlich ist, wo sich genau die Modulbaugruppen räumlich befinden. In der Regel erfolgt dies durch zeitliches Schalten und Abfragen von unterschiedlichen Sendern und Empfängern, wobei die bereits lokalisierte Modulbaugruppe sukzessive abgeschaltet wird, um die verbliebenen Modulbaugruppen abzufragen und um deren Position zu bestimmen. Dadurch verringert sich bei jedem interaktiven Schritt die Anzahl der Modulbaugruppen, so dass am Ende noch eine Modulbaugruppe übrig bleibt, deren Position logisch am Ende ist. Weitere Details erfolgen im weiteren Text.

In einer möglichen Ausführungsform können die Modulbaugruppen auch räumlich voneinander beabstandet sein. D.h. es bedarf nicht eines unmittelbaren Kontaktes. Diese Anordnung hängt jedoch auch von der Art des Senders und Empfängers ab. Bei optischen Systemen, bei dem der Empfänger ein optisches Sender- / Empfängersystem ist, kann ein ausreichender Abstand gegeben sein. Sollten hingegen mechanische Systeme verwendet werden, so ist dies nur eingeschränkt möglich.

In einer alternativen Anordnung können die Modulbaugruppen räumlich aneinandergrenzen und Kontaktflächen aufweisen.

Das Kommunikationsnetzwerk kann eines oder mehrere der Folgenden sein:
- eine drahtlose Verbindung, insbesondere eine Wlan-Verbindung; Bluetooth; Zigbee; NFC oder eine IR-Verbindung, oder auch
eine drahtgebundene Verbindung, insbesondere Ethernet, serielle Verbindung, CAN etc.

In einer bevorzugten Ausführungsform handelt es sich um ein IP(TCP/IP) Netzwerk, mit den entsprechenden Diensten und Kommunikationsformen.

In einer bevorzugten Ausführung sind die Sender (S) und Empfänger (R) auch während des Betriebs und nach der Initialisierung weiterhin angeschaltet, und wenn eine Änderung des Status auftritt, so wird über das Kommunikationsnetzwerk eine Meldung übermittelt, so dass die Entfernung und/oder das Einfügen von Modulbaugruppen während des Betriebs erkannt werden. Somit kann sichergestellt werden, dass keine Module während des Betriebs unbemerkt entfernt werden. Dies ist insbesondere interessant für die Steuerung der Übergabe eines Objekts von einem Modul zum Nächsten, um voraus bestimmen zu können, ob die Übergabe überhaupt stattfinden kann, ohne eine Beschädigung des Objekts oder einen Fehler zu erzeugen.

In einer bevorzugten Ausführungsform weist eine Modulbaugruppe eine Steuereinheit auf, man kann es auch als Master bezeichnen, die Zugriff auf den DHCP-Server/Dienst hat oder diesen selber bereitstellt und die anderen Modulbaugruppen steuert und die Ergebnisse auswertet, um die räumlichen Adressen zu vergeben. Diese Steuereinheit kann ein Rechnersystem (z.B. Linux) auf einer kleinen Platine sein, das den DHCP-Server bereitstellt, und das nach dem Empfangen einer DHCP Anfrage und dem Bereitstellen einer DHCP-Adresse, die räumliche Anordnung bestimmt, indem in einem bestimmten zeitlichen Muster die Sender und Empfänger durch Übermittlung von Befehlen über das Kommunikationsnetzwerk gesteuert und ausgewertet werden. Hierbei werden vorzugsweise folgenden Schritte durchgeführt:
a) Initial Auffordern alle Modulbaugruppen über das Kommunikationsnetzwerk ihre Sender (S) anzuschalten und die Empfänger (R) zu überwachen,
b) Empfangen der Statusmeldungen bzgl. der Empfänger (R) der einzelnen Modulbaugruppen über das Kommunikationsnetzwerk,
c) Zuordnen der räumlichen Startadresse an die Modulbaugruppe, die kein Signal über den Empfänger (R) empfängt;
d) Auffordern zum Abschalten aller Sender, und Auswählen und Auffordern der zuletzt räumlich adressierten Modulbaugruppe, ihren Sender anzuschalten über das Kommunikationsnetzwerk;
e)Empfangen der Statusmeldungen der einzelnen Modulbaugruppen über das Kommunikationsnetzwerk;
f)Zuordnen der räumlichen Nachbaradresse an den Empfänger eines Signals des Senders,
g)wiederholtes Durchführen der Schritte d),e),f) bis alle Modulbaugruppen räumlich zugordnet wurden, die über das Kommunikationsnetzwerk eine Adresse bezogen haben.

Ein weiterer Teil der Erfindung stellt eine Vorrichtung bereit, die entsprechend ausgebildet ist, um das oben genannte Verfahren umzusetzen.

Die Erfindung hat insbesondere dort Vorteile, wo Systeme auch nachträglich in ihrer Zusammensetzung geändert werden können, z.B. aufgrund eines zusätzlichen Produktionsschritts, welcher über ein zusätzliches Modul an beliebiger Stelle in ein bereits bestehendes System eingefügt werden kann, oder während des Betriebs einzelne Module temporär zu entnehmen sein sollten, da sowohl die Anwesenheit, als auch die korrekte Ausrichtung des Moduls im System überprüft werden.

Die Erfindung wird anhand der nachfolgenden Figuren ausführlich erläutert. Es zeigen:
Fig. 1 Eine Prinzipdarstellung eines Systems aus vertikal gestapelten Modulen inklusive der Sende- und Empfangseinheiten zur räumlichen Zuordnung und Ausrichtung sowie der exemplarischen Darstellung des Kommunikationskanals.
Fig. 2 Eine isometrische Darstellung eines Moduls zur vertikalen Stapelbildung inklusive der Sende- und Empfangseinheiten zur räumlichen Zuordnung und Ausrichtung.
Fig. 3 Eine isometrische Darstellung eines Systems aus vertikal gestapelten Modulen inklusive der Sende- und Empfangseinheit zur räumlichen Zuordnung und Ausrichtung.
Fig. 4 Eine isometrische Darstellung eines Systems aus vertikal gestapelten Modulen, wobei die Erkennung des Versatzes eines Moduls entlang einer fiktiven x-Achse mithilfe der Sende- und Empfangseinheit erläutert werden soll.
Fig. 5 Eine Prinzipdarstellung eines Moduls zur horizontalen Aufreihung zu einem System, inklusive der Sende- und Empfangseinheiten zur räumlichen Zuordnung und Ausrichtung.
Fig. 6 Eine isometrische Darstellung eines Systems aus Modulen in horizontalem Verbund, wobei die Erkennung eines zu großen Abstands der Module entlang einer fiktiven x-Achse mithilfe der Sende- und Empfangseinheit erläutert werden soll.
Fig. 7 Eine isometrische Darstellung eines Systems aus Modulen in horizontalem Verbund, wobei die Erkennung eines Versatzes eines Moduls entlang einer fiktiven z-Achse mithilfe der Sende- und Empfangseinheit erläutert werden soll.
Fig. 8 Eine isometrische Darstellung eines Systems aus Modulen in horizontalem Verbund, wobei die Erkennung eines Versatzes eines Moduls entlang einer fiktiven y-Achse mithilfe der Sende- und Empfangseinheit erläutert werden soll.
Fig. 9 Ablaufdiagramm der logischen und räumlichen Adressierung infolge des Systemstarts.

In den Figuren bezeichnen gleiche Bezugsziffern gleiche oder funktionsgleiche Teile, wobei zur besseren Übersicht nicht sämtliche Bezugsziffern in sämtlichen Figuren angegeben sind.

### Detaillierte Beschreibung der Erfindung

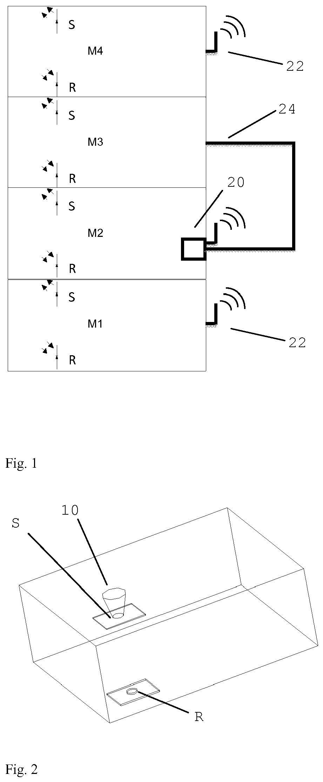

Fig. 1 zeigt eine schematische Darstellung eines modularen Systems aus Modulen (M), die vertikal zueinander ausgerichtet sind, bestehend aus den Modulen M1, M2, M3 und M4.

Der Datenkanal zur Kommunikation wird hierbei über ein lokales Netzwerk hergestellt, welches dem IEEE 802.11 Standard entsprechen könnte und welches, wie in Fig. 1 angedeutet, die physikalische Verbindung mithilfe von Sende- / Empfangsantennen eines drahtlosen Kommunikationskanals (22) herstellen kann. Es ist jedoch durchaus praktikabel, anstatt der angedeuteten Sende- / Empfangsantennen eines drahtlosen Kommunikationskanals (22) auf eine leitungsgebundene Kommunikationsverbindung (24), wie dem zu IEEE 802.11 weitgehend kompatiblen Standard IEEE 802.3, zurückzugreifen. Dies hat insbesondere dort Vorteile, wo hohe Anforderungen an Datenraten und Datenstabilität gestellt werden. Auch in die leitungsgebunden Variante hat Vorteile gegenüber dem Stand der Technik bezüglich des Installationsaufwands, da an derartigen Netzwerksystemen keine Reihenfolge bezüglich der Steckplätze eingehalten werden muss und daher keine bestehenden Verbindungen neu verdrahtet werden müssen.

Der Controller zur automatischen Adresszuweisung des Kommunikationskanals (20), welcher über ein dynamisches Adressvergabeprotokoll, wie beispielsweise DHCP, verfügt, gewährleistet die logische Eindeutigkeit der Adressierung für die Kommunikation über den Datenkanal.

Der optische Empfänger (R) eines Moduls (M), ist vorgesehen, um das vom Sender (S) emittierte Signal (10) eines Nachbarmoduls (M), welches sich in Form eines ausgesandten Lichtkegels (10) ausbreitet, der in Fig. 2 exemplarisch dargestellt ist, aufzunehmen. Dieses Signal kann daraufhin wieder herangezogen werden, um die Anwesenheit bzw. die korrekte Ausrichtung eines Nachbarmoduls Mₙ₋₁ relativ zum Modul Mₙ des Empfängers (R) zu bestätigen.

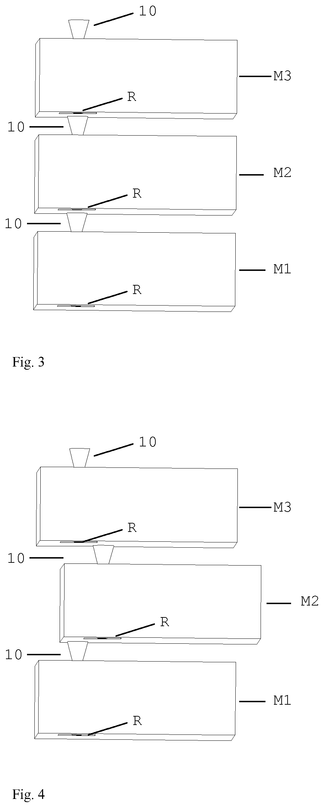

Fig. 3 zeigt ein System aus vertikal gestapelten Modulen (M), welche beabstandet zueinander angeordnet sind, um exemplarisch zu zeigen, dass der Abstand, in welchem Signale als zulässig ausgewertet werden, lediglich eine Frage der Einstellung der Sensitivität der Empfänger (R) und der Intensität des ausgesandten Signals (10) des Senders (S) ist. Es zeigt aber auch, dass aufgrund der Kegelbildung des optischen Signals, die Ausrichtung beabstandeter Module mit zunehmendem Abstand ungenauer wird, es sei denn, man verwendet Lichtquellen, welche gebündeltes Licht aussenden. Aus Gründen der Übersichtlichkeit, wurde darauf verzichtet die Konstruktion darzustellen, welche vertikal gestapelte Module auf Abstand halten könnte. Dies könnten beispielsweise Auszugsschienen sein, welche in Rahmenkonstruktionen befestigt sind, um ein einfaches Herausnehmen der Module (M) aus dem System zu gewährleisten, zum Beispiel um Medien einzufügen, auszutauschen, oder nachzufüllen. Als konkretes Beispiel wäre hier eine stapelbare Bandspeicherbibliothek zu nennen, wobei jedes Modul (M) für sich betrachtet eine Bandspeicherbibliothek inklusive der Aufnahmen für die Speichermedien und einer Einrichtung zum Datentransfer von/auf den/die Speichermedien darstellt, jedoch mit der Einschränkung, dass lediglich ein Transporter für alle Module (M) zur Verfügung steht, welcher die Speichermedien von den jeweiligen Aufnahmen zu den Datentransfereinrichtungen und umgekehrt transportiert. Nun werden die einem Baugruppenträger in Form eines Rahmengestells montiert. Der Vorteil der vorgestellten Erfindung wäre, dass die einzelnen Module (M) mittels Auszugschienen mit dem Baugruppenträger verbunden sind und während des Betriebs des Gesamtsystems einzelne Module (M) beispielsweise zu Reparaturzwecken aus dem Systemverbund entfernt werden können, ohne dass der Betrieb des Gesamtsystems unterbrochen werden muss. Dabei würde beim Herausziehen eines Moduls (M) vom benachbarten Modul (M) anhand des fehlenden Signals (10) am Empfänger (R) erkannt, dass der Systemverbund an dieser Stelle unterbrochen ist. Der Betrieb des Systems könnte damit in dem Teil des Systems, in welchem sich der Transporter befindet, weitergeführt werden, und zwar bis an die neue Systemgrenze hin, welche durch das herausgezogene Modul (M) gegeben ist.

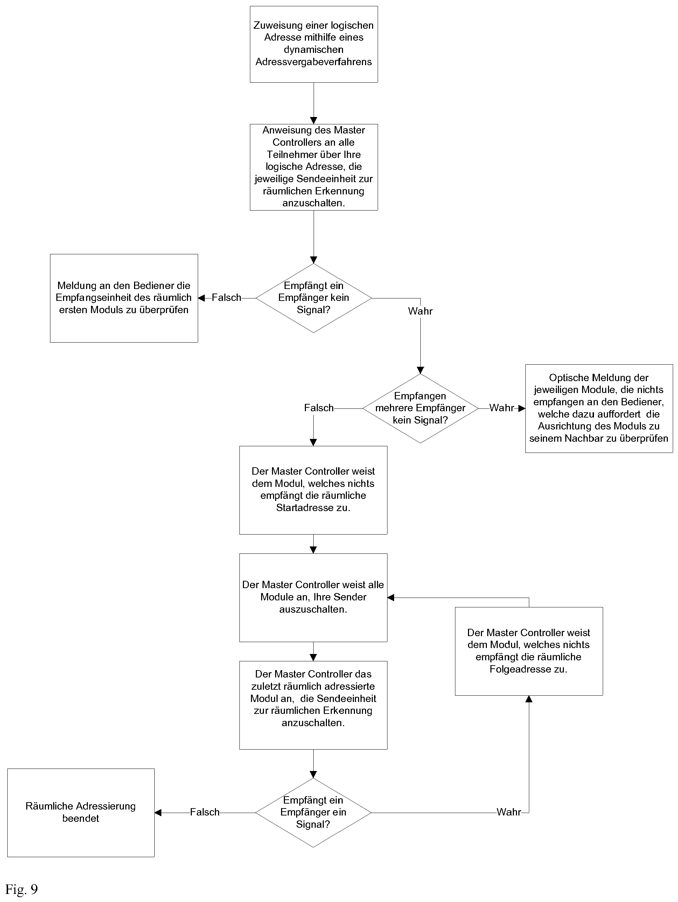

Fig. 4 zeigt ein System aus vertikal gestapelten Modulen (M), welche entlang einer fiktiven x-Achse einen Versatz zueinander aufweisen. Während einer Systeminitialisierung und einer damit verbundenen initialen, logischen und räumlichen Adressierung, wie in Fig. 9 dargestellt, würde aufgrund des fehlenden Signals an den Empfängern (R) der Module M1, M2 und M3, nun keinerlei Nachbarschaftsbeziehungen erkannt. Da den Modulen (M) jedoch bereits logische Adressen für den Kommunikationskanal zugeteilt wurden, würde daraus eine Systemdiskrepanz erkannt und es könnte dementsprechend eine Meldung ausgegeben werden, welche einen Bediener eines derartigen Systems beispielsweise darauf hinweist, die Ausrichtung der Module (M) des Systems zueinander zu überprüfen.

Die AbbildungenFig. 1, Fig. 2, Fig. 3 und Fig. 4 könnten exemplarisch für eine stapelbare Bandspeicherbibliothek stehen, wobei jedes dieser Module über eine bestimmte Anzahl von Aufnahmevorrichtungen für Datenträger, aber mitunter auch eine oder mehrere Vorrichtungen zur Aufnahme- bzw. Wiedergabe der Daten zur Verfügung stellt. Nun verfügt ein derartiges System über einen Transporter, welcher durch die entsprechenden Module des Systems hindurchfährt, um beispielsweise die Datenträger aus der Aufnahmevorrichtung zu einer Aufnahme- bzw. Wiedergabevorrichtung zu transportieren.

Der Hintergrund stapelbarer automatisierter Bandspeicherbibliotheken liegt darin, dass man zunächst eine Basiskonfiguration zusammenstellen kann und das System im Nachhinein, je nach zusätzlichem Speicherbedarf, um weitere Module mit Aufnahmevorrichtungen für Datenträger sowie Vorrichtungen zur Aufnahme bzw. Wiedergabe der Daten zu erweitern. Dementsprechend muss beim Systemstart zunächst ermittelt werden, aus wie vielen Modulen sich das System zusammensetzt, um daraufhin die Nachbarschaftsbeziehungen herzuleiten.

Während des Betriebs können einzelne Module (M) des Systems zeitweise aus der Systemordnung herausgenommen werden, um bspw. Reparaturen bzw. Komponentenaustausch vornehmen zu können. Dies muss allerdings vom System erkannt werden, welches für diese Zeit weiterarbeiten kann, wie bereits beschrieben, jedoch im Zugriffsbereich eingeschränkt ist.

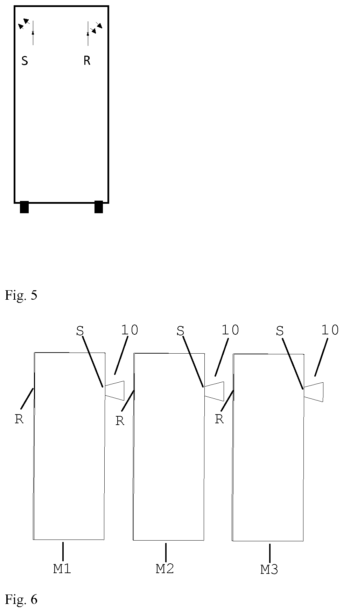

Anhand von Fig. 5 soll dargestellt werden, dass sich die Vorrichtung und das Verfahren zur automatischen Adressierung und Erkennung von räumlichen Nachbarschaftsbeziehungen nicht auf vertikal stapelbare Module (M) eines modularen Systems beschränkt. Es gibt durchaus Anwendungsfälle für modulare Systeme, wobei die Module horizontal aufgereiht werden. Teilt man beispielsweise eine Maschine für die Druckweiterverarbeitung anhand der zu erledigenden Prozesse in Module (M) auf, so erhält man Module (M), wobei eines beispielsweise den Vereinzelungsprozess repräsentiert, eine anderes Modul (M) den Schneideprozess, ein weiteres den Binder, den Ausrichtprozess, die Kaschiereinheit, die Druckeinheit, oder die Ansammel- bzw. Abstapeleinheit etc.

Somit lassen sich Systeme aus beinahe beliebigen Konstellationen zusammenstellen. Es muss allerdings gewährleistet sein, dass die Ausrichtung der einzelnen Module (M) des Systems zueinander stimmt, da sonst Objekte nicht sicher über die Modulgrenze hinweg übergeben werden können. Um dies zu gewährleisten, wird wie in Fig. 9 dargestellt, zunächst mithilfe eines dynamischen Adressvergabeverfahrens, wie beispielweise DHCP, von jedem Moduls (M) des Systems eine logische Adresse bezogen. Im Folgenden werden Module (M), welche eine logische Adresse bezogen haben, als teilnehmende Module bezeichnet. Daraufhin weist eine übergeordnete Systemsteuereinheit bzw. eine Steuereinheit mit erweiterten Rechten die teilnehmenden Module (M) an, ihre jeweiligen Sender (S) zur räumlichen Erkennung der Nachbarschaftsbeziehungen einzuschalten. Dementsprechend prüft jedes teilnehmende Modul (M) anschließend, ob der Empfänger (R) des jeweiligen Moduls (M) ein Signal empfängt. Die Erkennung eines Signals der jeweiligen Module (M) kann nun innerhalb der übergeordneten Systemsteuereinheit entsprechend ausgewertet werden. Für den Fall, dass kein Empfänger (R) ein Signal empfängt bzw. mehrere Empfänger (R) kein Signal empfangen, können entsprechende Bedienerinteraktionen eingeleitet werden, mit dem Ziel das Fehlverhalten aufzulösen. Im besten Fall gibt es genau einen Empfänger (R), der kein Signal empfängt, womit das entsprechende Modul (M) als räumlicher Startpunkt des Systems definiert werden kann. Als Folge der Erkennung des räumlichen Startpunkts des Systems, weist die übergeordnete Systemsteuereinheit dem entsprechenden Modul (M) die räumliche Startadresse zu.

Im Anschluss an die räumliche Adresszuweisung folgt eine Anweisung der übergeordneten Systemsteuereinheit, welche auch als Master bezeichnet werden kann, an alle teilnehmenden Module (M), die jeweiligen Sender (S) auszuschalten. Nun weist die übergeordnete Systemsteuereinheit, der Master, das jeweils zuletzt räumlich adressierte Modul (M) an, seinen Sender (S) anzuschalten und fragt wiederum alle teilnehmenden Module (M) an, ob ein Signal empfangen wurde, worauf dann die räumliche Folgeadresse zugewiesen wird. Diese Prozedur wird, wie in Fig. 9 gezeigt, solange fortgesetzt, bis das Einschalten des Senders (S), des zuletzt räumlich adressierten Moduls (M) von keinem weiteren Modul (M) mehr empfangen wird.

Im Rahmen der räumlichen Erkennung und Fehlerbehandlung werden auch Fälle abgedeckt, wobei das System zwar generell aus den jeweiligen Modulen (M) besteht, allerdings die korrekte Ausrichtung der Module zueinander noch nicht gewährleistet ist.

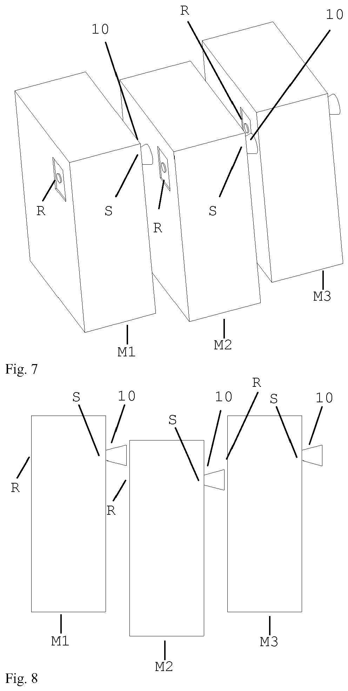

Fig. 6 stellt exemplarisch einen Fall dar, wobei die Module (M) des Systems im horizontalen Verbund einen zu großen Abstand entlang einer fiktiven x-Achse zueinander aufweisen. Dies kann anhand einer Schwellwertunterschreitung des Empfängers (R) festgestellt werden, wobei hinzuzufügen ist, dass es je nach verwendetem Empfänger (R) möglich sein kann, den Schwellwert anzupassen, womit die notwendige Genauigkeit der Ausrichtung der Module (M) zueinander beeinflussbar ist. Analog dazu kann auch ein Versatz entlang einer fiktiven z-Achse, wie in Fig. 7 dargestellt, sowie ein Versatz entlang einer fiktiven y-Achse, was Fig. 8 zeigt, festgestellt werden.

Ein besonderer Vorteil des vorgeschlagenen Verfahrens bezüglich der Anwendung in industriellen Anlagen ist, dass auch während des Betriebs stets die Ausrichtung der Module-zueinander überwacht werden kann. Dazu müssen lediglich auch während des Betriebs alle Sender (S) eingeschaltet sein. Dies kann insbesondere dann von Interesse sein, wenn innerhalb der industriellen Anwendung große Lasten bewegt werden, z.B. Paletten mit Staplern, und es aufgrund von Unachtsamkeiten bei der Bewegung dieser Lasten zur Verschiebung einzelner Module kommt. Mit vorgeschlagenem Verfahren wäre es möglich die Diskrepanz hinsichtlich der Ausrichtung anhand eines veränderten Signalpegels am Empfänger (R) zu erkennen, bevor es zu einem Fehlverhalten bei der Objektübergabe und der damit möglichen Beschädigung von Objekten kommt.

Es ist zu beachten, dass das Verfahren und die Vorrichtungen nicht nur auf die oben genannten Beispiele einzuschränken sind. Vielmehr ist der grundsätzliche Ansatz auf allen modularen Systemen anzuwenden, deren relative räumliche Anordnung zueinander von Interesse ist.

### Bezugszeichenliste

- 10: Ausgesandter Lichtkegel
- 20: Controller zur automatischen Adresszuweisung des Kommunikationskanals
- 22: Sende- / Empfangsantennen eines drahtlosen Kommunikationskanals
- 24: Leitungsgebunde Kommunikationsverbindung

- M: Modulbaugruppe
- M1: Modulbaugruppe
- M2: Modulbaugruppe
- M3: Modulbaugruppe
- M4: Modulbaugruppe
- S: Sender
- R: Empfänger

## Patentansprüche

1. Ein Verfahren zur Erkennung räumlicher Nachbarschaftsbeziehungen in einem modularen System, umfassend Modulbaugruppen (M1,.. Mn), wobei jede Modulbaugruppe mindestens einen Sender (S) und mindestens einen Empfänger (R) aufweist, die so angeordnet sind, dass bei korrekter Ausrichtung der Modulbaugruppen (M), mindestens ein optischer Sender (S) einer ersten Modulbaugruppe (M) mit mindestens einem optischen Empfänger (R) einer zweiten Modulbaugruppe (M) korrespondiert, und wobei die Modulbaugruppen (M) zusätzlich zu dem Sender (S) und dem Empfänger (R) jeweils einen Netzwerkanschluss aufweisen, um über ein Kommunikationsnetzwerk mit anderen Modulbaugruppen (M) miteinander verbunden zu sein, umfassend die Schritte:
- automatisches Anfordern und Zuordnen einer Netzwerkadresse für den Netzwerkanschluss über das Kommunikationsnetzwerk durch die jeweiligen Modulbaugruppen, so dass diese über das Netzwerk adressierbar sind;
- Bestimmung der Genauigkeit der räumlichen Ausrichtung der Module zueinander durch eine Steuereinheit durch Ansteuern und Auswerten des optischen Signals des Senders (S) und Empfängers (R) mit Hilfe des Kommunikationsnetzwerks über den Netzwerkanschluss,
wobei die Modulbaugruppen räumlich voneinander beabstandet sind oder die Modulbaugruppen räumlich aneinandergrenzen und Kontaktflächen aufweisen.

2. Das Verfahren nach dem vorhergehenden Anspruch, **dadurch gekennzeichnet, dass** das Kommunikationsnetzwerk eines oder mehreres des Folgenden sein kann:
- eine drahtlose Verbindung, insbesondere
- Wlan-Verbindung;
- Bluetooth;
- Zigbee;
- NFC
- IR-Verbindung
eine drahtgebundene Verbindung, insbesondere
- Ethernet,
- serielle Verbindung.

3. Das Verfahren nach einem oder mehreren der vorgehenden Ansprüche, **dadurch gekennzeichnet, dass** während des Betriebs die Sender (S) und Empfänger (R) weiterhin angeschaltet sind, und wenn eine Änderung des Status auftritt, so wird über das Kommunikationsnetzwerk eine Meldung übermittelt, so dass die Entfernung und/oder das Einfügen von Modulbaugruppen während des Betriebs erkannt werden.

4. Das Verfahren nach einem oder mehreren der vorhergehenden Ansprüche, **dadurch gekennzeichnet, dass** jede Modulbaugruppe (M) einmalig nach dem Starten über DHCP eine IP-Adresse über das Kommunikationsnetzwerk bezieht, über die kommuniziert wird.
und/oder
wobei mindestens eine Modulbaugruppe einen Master bereitstellt, der Zugriff auf den DHCP-Server/Dienst hat, und die anderen Modulbaugruppen (M) steuert und die Ergebnisse auswertet, um die räumlichen Adressen zu vergeben.

5. Das Verfahren nach einem oder mehreren der vorhergehenden Ansprüche, **gekennzeichnet durch** die folgenden Schritte:
a) anfängliches Auffordern alle Modulbaugruppen über das Kommunikationsnetzwerk ihre Sender (S) anzuschalten und die Empfänger (R) zu überwachen,
b) Empfangen der Statusmeldungen bzgl. der Empfänger (R) der einzelnen Modulbaugruppen über das Kommunikationsnetzwerk,
c) Zuordnen der räumlichen Startadresse an die Modulbaugruppe (M), die kein Signal über den Empfänger (R) empfängt;
d) Auffordern zum Abschalten aller Sender, und Auswählen und Auffordern der zuletzt räumlich adressierten Modulbaugruppe (M), ihren Sender anzuschalten über das Kommunikationsnetzwerk;
e)Empfangen der Statusmeldungen der einzelnen Modulbaugruppen über das Kommunikationsnetzwerk;
f)Zuordnen der räumlichen Nachbaradresse an den Empfänger eines Signals des Senders,
g)wiederholtes Durchführen der Schritte d),e)f) bis alle Modulbaugruppen räumlich zugordnet wurden, die über das Kommunikationsnetzwerk eine Adresse bezogen haben.

6. Ein modulares System umfassend Modulbaugruppen (M1,.. Mn) deren räumliche Nachbarschaftsbeziehungen zu erkennen sind, wobei jede Modulbaugruppe mindestens einen optischen Sender (S) und mindestens einen optischen Empfänger (R) aufweist, die so angeordnet sind, dass bei korrekter Ausrichtung der Modulbaugruppen, ein Sender (S) einer ersten Modulbaugruppe mit einem Empfänger (R) einer zweiten Modulbaugruppe korrespondiert, und wobei die Modulbaugruppen zusätzlichen zu dem Sender (S) und dem Empfänger (R) jeweils einen Netzwerkanschluss aufweisen, um über ein Kommunikationsnetzwerk miteinander verbunden zu sein, **gekennzeichnet durch** eine Steuereinheit, die eingerichtet und ausgebildet ist, zur automatischen Anforderung und Zuordnung einer Netzwerkadresse für den Netzwerkanschluss über das Kommunikationsnetzwerk durch jede Modulbaugruppe, so dass diese über das Netzwerk adressierbar sind; und wobei die Steuereinheit ausgebildet ist zur Bestimmung der Genauigkeit der räumlichen Ausrichtung der Module zueinander, durch Ansteuern und Auswerten des optischen Signals des Senders (S) und Empfängers (R) mit Hilfe des Kommunikationsnetzwerks über den Netzwerkanschluss, wobei
die Modulbaugruppen räumlich voneinander beabstandet sind oder die Modulbaugruppen räumlich aneinandergrenzen und Kontaktflächen aufweisen.

7. Das modulare System nach dem vorhergehenden Systemanspruch, **dadurch gekennzeichnet, dass** das Kommunikationsnetzwerk eines oder mehreres des Folgenden ist:
- eine drahtlose Verbindung, insbesondere
- Wlan-Verbindung;
- Bluetooth;
- Zigbee;
- NFC
- IR-Verbindung
eine drahtgebundene Verbindung, insbesondere
- Ethernet,
- serielle Verbindung.

8. Das modulare System nach einem oder mehreren der vorgehenden Systemansprüche, **dadurch gekennzeichnet, dass** während des Betriebs die Sender (S) und Empfänger (R) weiterhin angeschaltet sind, und sie ausgebildet sind, dass wenn eine Änderung des Status auftritt, über das Kommunikationsnetzwerk eine Meldung übermittelt wird, so dass die Entfernung und/oder das Einfügen von Modulbaugruppen während des Betriebs erkennbar ist.

9. Das modulare System nach einem oder mehreren der vorhergehenden Systemansprüche, **gekennzeichnet durch** eine Konfiguration die jeder Modulbaugruppe einmalig nach dem Starten über DHCP eine IP-Adresse über das Kommunikationsnetzwerk bereitstellt, über die eine Kommunikation durchführbar ist, und/oder dass mindestens eine Modulbaugruppe einen Master bereitstellt, der Zugriff auf den DHCP-Server/Dienst hat, und die anderen Modulbaugruppen steuert und die Ergebnisse auswertet, um die räumlichen Adressen zu vergeben.

10. Das modulare System nach einem oder mehreren der vorhergehenden Systemansprüche, **gekennzeichnet durch** eine Konfiguration die folgende Schritte ermöglicht:
a) anfängliches Auffordern alle Modulbaugruppen (M) über das Kommunikationsnetzwerk ihren Sender (S) anzuschalten und die Empfänger (R) zu überwachen,
b) Empfangen der Statusmeldungen der Empfänger (R) der einzelnen Modulbaugruppen (M) über das Kommunikationsnetzwerk,
c) Zuordnen der räumlichen Startadresse an die Modulbaugruppe (M), die kein Signal über den Empfänger (R) empfängt;
d) Auffordern zum Abschalten aller Sender, und Auswählen und Auffordern der zuletzt räumlich adressierten Modulbaugruppe (M), ihren Sender anzuschalten über das Kommunikationsnetzwerk;
e) Empfangen der Statusmeldungen der einzelnen Modulbaugruppen (M) über das Kommunikationsnetzwerk;
f) Zuordnen der räumlichen Nachbaradresse an den Empfänger eines Signals des Senders,
g) wiederholtes Durchführen der Schritte d),e),f) bis alle Modulbaugruppen (M) räumlich zugordnet wurden, die über das Kommunikationsnetzwerk eine Adresse bezogen haben.

## Claims

1. Method for the recognition of spatial proximity relationships in a modular system comprising module assemblies (M1 ,..Mn), wherein each module assembly has at least one transmitter (S) and at least one receiver (R) which are arranged so that, with a correct alignment of the module assemblies (M), at least one optical transmitter (S) of a first module assembly (M) corresponds to at least one optical receiver (R) of a second module assembly (M), and wherein the module assemblies (M) each have, in addition to the transmitter (S) and the receiver (R), a network connection for connection via a communication network to other module assemblies (M), the method comprising the steps of:
- automatically requesting and assigning a network address for the network connection via the communication network through the respective module assemblies so that these module assemblies can be addressed via the network; and
- determining the accuracy of the spatial alignment of the module assemblies by triggering and evaluating the optical signal of the transmitter (S) and of the receiver (R) with the aid of the communication network via the network connection,
wherein the module assemblies are spaced apart from one another or the module assemblies have spatially adjoining and contact surfaces.

2. Method according to the preceding claim, **characterised in that** the communication network can be one or more of the following:
- a wireless connection, in particular
- Wlan connection,
- Bluetooth,
- Zigbee,
- NFC,
- IR connection,
a wired connection, in particular
- Ethernet,
- serial connection.

3. Method according to one or more of the preceding claims, **characterised in that** furthermore during operation the transmitters (S) and receivers (R) are switched on and, if a change in status occurs, a notification is transmitted via the communication network so that the removal and/or the introduction of module assemblies during the operation are recognised.

4. Method according to one or more of the preceding claims, **characterised in that**, after starting via DHCP, each module assembly (M) obtains an IP address once via the communication network by means of which communication takes place, and/or wherein at least one module assembly provides a master which has access to a DHCP server/service, and controls the other module assemblies (M) and evaluates the results in order to assign the spatial addresses.

5. Method according to one or more of the preceding claims, **characterised by** the following steps:
a) initially requesting all module assemblies via the communication network to switch on their transmitters (S) and monitor the receivers (R);
b) receiving status notifications regarding the receivers (R) of the individual module assemblies via the communication network;
c) assigning the spatial start address to the module assembly (M) which receives no signal via the receiver (R);
d) requesting to switch off all transmitters, and selecting and requesting the last spatially addressed module assembly (M) to switch on its transmitter via the communication network;
e) receiving the status notifications of the individual module assemblies via the communication network;
f) assigning the spatial adjacent address to the receiver of a signal of the transmitter;
g) repeatedly carrying out the steps d), e) and f) until all module assemblies which have obtained an address via the communication network have been spatially assigned.

6. Modular system comprising module assemblies (M1,.. Mn) of which the spatial proximity relationships are to be recognised, wherein each module assembly comprises at least one optical transmitter (S) and at least one optical receiver (R) which are arranged so that, with a correct alignment of the module assemblies, a transmitter (S) of a first module assembly corresponds to a receiver (R) of a second module assembly, and wherein the module assemblies each have, in addition to the transmitter (S) and the receiver (R), a network connection for connection to one another via a communication network, **characterised by** a control unit which is configured and designed for automatically requesting and assigning a network address for the network connection via the communication network by each module assembly, so that these assemblies can be addressed via the network; and wherein the control unit is designed to determine the accuracy of the spatial alignment of the modules with respect to one another, by triggering and evaluating the optical signal of the transmitter (S) and receiver (S) with the aid of the communication network via the network connection, wherein the module assemblies are spatially separated from one another or the module assemblies spatially adjoin one another and have contact surfaces.

7. Modular system according to the preceding system claim, **characterised in that** the communication network is one or more of the following:
- a wireless connection, in particular
- Wlan connection,
- Bluetooth,
- Zigbee,
- NFC,
- IR connection,
a wired connection, in particular
- Ethernet,
- serial connection.

8. Modular system according to one or more of the preceding system claims, **characterised in that** furthermore during the operation the transmitter (S) and receiver (R) is switched on and it is configured so that, if a change in status occurs, a notification is transmitted via the communication network so that the removal and/or the introduction of module assemblies during the operation can be recognised.

9. Modular system according to one or more of the preceding system claims, **characterised by** a configuration which after starting via DHCP provides each module assembly once by means of the communication network with an IP address via which communication can be carried out, and/or in that at least one module assembly provides a master which has access to a DHCP server/service, and controls the other module assemblies and evaluates results in order to assign the spatial addresses.

10. Modular system according to one or more of the preceding system claims, **characterised by** a configuration which facilitates the following steps:
a) initially requesting all module assemblies (M) via the communication network to switch on their transmitters (S) and to monitor the receivers (R);
b) receiving status notifications of the receivers (R) of the module assemblies (M) via the communication network;
c) assigning the spatial start address to the module assembly (M) which receives no signal via the receiver (R);
d) requesting switching off of all transmitters, and selecting and requesting the last spatially addressed module assembly (M) to switch on its transmitter via the communication network;
e) receiving the status notifications of the individual module assemblies (M) via the communication network;
f) assigning the spatial adjacent address to the receivers of a signal of the transmitter;
g) repeatedly carrying out steps d), e), and f) until all module assemblies (M) which have received an address via the communication network have been spatially assigned.

## Revendications

1. Procédé permettant d'identifier des relations spatiales de voisinage dans un système modulaire comprenant des sous-ensembles modulaires (M1,...Mn), chaque sous-ensemble modulaire comportant au moins un émetteur (S) et au moins un récepteur (R) qui sont montés de sorte que, en présence d'une orientation correcte des sous-ensembles modulaires (M), au moins un émetteur optique (S) d'un premier sous-ensemble modulaire (M) corresponde à au moins un récepteur optique (R) d'un second sous-ensemble modulaire, et les sous-ensembles modulaires (M) comprenant chacun, outre l'émetteur (S) et le récepteur (R) une connexion de réseau pour pouvoir être reliés ensemble par l'intermédiaire d'un réseau de communication avec d'autres sous-ensembles modulaires (M), procédé comprenant les étapes suivantes consistant à :
demander et attribuer automatiquement une adresse de réseau pour la connexion de réseau par l'intermédiaire du réseau de communication,
par les sous-ensembles modulaires respectifs de sorte que ceux-ci puissent être adressés par l'intermédiaire du réseau,
déterminer la précision de l'orientation spatiale des modules les uns par rapport aux autres par une unité de commande, par commande et évaluation du signal optique de l'émetteur (S) et du récepteur (R) à l'aide du réseau de communication par l'intermédiaire de la connexion de réseau,
les sous-ensembles modulaires étant situés à distance spatiale les uns des autres ou étant spatialement voisins les uns des autres et comportant des surfaces de contact.

2. Procédé conforme à la revendication précédente,
**caractérisé en ce que**
le réseau de communication peut être constitué par au moins l'un des réseaux suivants :
- une liaison sans fil, en particulier
- une connexion WLAN,
- Bluetooth,
- Zigbee,
- NFC,
- une liaison IR,
- une liaison filaire, en particulier
- Ethernet,
- une connexion série.

3. Procédé conforme à au moins l'une des revendications précédentes,
**caractérisé en ce qu'**
en cours d'utilisation, l'émetteur (S) et le récepteur (R) restent branchés, et lorsqu'une modification du statut se présente, un message est transmis, par l'intermédiaire du réseau de communication, pour que l'éloignement et/ou l'insertion de sous-ensembles modulaires pendant le fonctionnement puisse(nt) être identifié(es).

4. Procédé conforme à au moins l'une des revendications précédentes,
**caractérisé en ce que**
chaque sous-ensemble modulaire (M), obtient après un premier démarrage via DHCP, une adresse IP sur le réseau de communication par laquelle il communique, et/ou
au moins l'un des sous-ensembles modulaires constitue un maître qui a accès au serveur/service DHCP et commande les autres sous-ensembles modulaires (M) et évalue les résultats pour attribuer les adresses spatiales.

5. Procédé conforme à au moins l'une des revendications précédentes,
**caractérisé par**
les étapes suivantes consistant à :
a) demander initialement à tous les sous-ensembles modulaires par l'intermédiaire du réseau de communication de brancher leur émetteur (S) et de surveiller le récepteur (R),
b) recevoir le message de statut concernant le récepteur (R) des sous-ensembles modulaires individuels par l'intermédiaire du réseau de communication,
c) attribuer l'adresse spatiale initiale au sous-ensemble modulaire (M) qui ne reçoit aucun signal sur le récepteur (R),
d) demander de couper tous les émetteurs et choisir et demander au sous-ensemble modulaire (M) adressé spatialement en dernier de brancher son émetteur par l'intermédiaire du réseau de communication,
e) recevoir les messages de statut des sous-ensembles modulaires individuels par l'intermédiaire du réseau de communication,
f) associer l'adresse spatialement voisine au récepteur d'un signal de l'émetteur,
g) répéter la mise en oeuvre des étapes d), e), f), jusqu'à ce que tous les sous-ensembles modulaires ayant obtenu une adresse par l'intermédiaire du réseau de communication aient été spatialement attribués.

6. Système modulaire comprenant des sous-ensembles modulaires (M1, ...Mn) dont les relations spatiales de voisinage doivent être identifiées, chaque sous-ensemble modulaire comportant au moins un émetteur optique (S) et au moins un récepteur optique (R) qui sont installés de sorte que, en présence d'une orientation correcte des sous-ensembles modulaires, un émetteur (S) d'un premier sous-ensemble modulaire corresponde à un récepteur (R) d'un second sous-ensemble modulaire, et les sous-ensembles modulaires comprenant chacun, en plus de l'émetteur (S) et du récepteur (R) une connexion de réseau pour pouvoir être reliés ensemble par l'intermédiaire d'un réseau de communication,
**caractérisé par**
une unité de commande qui est conçue et réalisée pour permettre de demander et attribuer automatiquement une adresse de réseau pour la connexion de réseau par l'intermédiaire du réseau de communication par chaque sous-ensemble modulaire, de sorte que ceux-ci puissent être adressés par l'intermédiaire du réseau, et l'unité de commande étant réalisée pour permettre de déterminer la précision de l'orientation spatiale des modules les uns par rapport aux autres par commande et évaluation du signal optique de l'émetteur (S) et du récepteur (R) à l'aide du réseau de communication par l'intermédiaire de la connexion de réseau,
les sous-ensembles modulaires étant situés à distance spatiale les uns des autres ou étant spatialement voisins et ayant des surfaces de contact.

7. Système modulaire conforme à la revendication de système précédente,
**caractérisé en ce que**
le réseau de communication est constitué par au moins l'un des réseaux suivants :
- une liaisons sans fil, en particulier
- une connexion Wlan,
- Bluetooth,
- Zigbee,
- NFC,
- une liaison IR,
- une liaison filaire, en particulier
- Ethernet,
- une connexion série.

8. Système modulaire conforme à au moins l'une des revendications de système précédentes,
**caractérisé en ce que**
pendant le fonctionnement, l'émetteur (S) et le récepteur (R) restent branchés et sont réalisés de sorte que, lorsqu'une modification du statut se présente, un message est transmis sur le réseau de communication pour que l'éloignement et/ou l'insertion de sous-ensembles modulaires pendant le fonctionnement puisse être identifié(es).

9. Système modulaire conforme à au moins l'une des revendications de système précédentes,
**caractérisé par**
une configuration qui permet de fournir à chaque sous-ensemble modulaire après un premier démarrage via DHCP une adresse IP sur le réseau de communication, par l'intermédiaire de laquelle une communication peut être mise en oeuvre, et/ou au moins un sous-ensemble modulaire correspond à un maître qui a accès au serveur service/DHCP et commande les autres sous-ensembles modulaires et évalue les résultats pour attribuer les adresses spatiales.

10. Système modulaire conforme à au moins l'une des revendications de système précédentes,
**caractérisé par**
une configuration qui permet la mise en oeuvre des étapes suivantes consistant à :
a) demander initialement à tous les sous-ensembles modulaires (M) par l'intermédiaire du réseau de communication de brancher leur émetteur (S) et de surveiller le récepteur (R),
b) recevoir les messages de statut concernant le récepteur (R) des sous-ensembles modulaires individuels (M) par l'intermédiaire du réseau de communication,
c) attribuer l'adresse spatiale initiale au sous-ensembles modulaires (M) qui ne reçoit pas de signal sur le récepteur (R),
d) demander de couper tous les émetteurs et choisir et demander au sous-ensemble modulaire (M) adressé spatialement en dernier de brancher son émetteur par l'intermédiaire du réseau de communication,
e) recevoir les messages de statut des sous-ensembles modulaires (M) individuels par l'intermédiaire du réseau de communication,
f) associer l'adresse spatialement voisine au récepteur d'un signal de l'émetteur,
g) répéter la mise en oeuvre des étapes d), e), f) jusqu'à ce que tous les sous-ensembles modulaires (M) ayant obtenu une adresse par l'intermédiaire du réseau de communication aient été spatialement attribués.
